# EUROPEAN PATENT APPLICATION

(11) **EP 3 328 131 A1**
(43) Date of publication of application: **30.05.2018**
(21) Application number: 16200835.3
(22) Date of filing: 28.11.2016
(51) Int. Cl.: H04W 48/18

(54) **A METHOD FOR SELECTING A COMMUNICATION LINK, A SYSTEM, A LOW-COMPLEXITY APPARATUS AND A COMPUTER PROGRAM PRODUCT**

(71) Applicant: Nokia Technologies Oy, 02610 Espoo (FI)
(72) Inventor: KANUGOVI, Satish, 560045 Bangalore (IN); ADHARAPURAPU, Pramod, 560045 Bangalore (IN); SUDARSAN, Padmavathi, Naperville, IL 60563-1594 (US); LAHA, Subhasis, Naperville, IL 60563-1594 (US)
(74) Representative: Bryers LLP

(57) **Abstract**

A method for selecting a communication link between a low-complexity device at the edge of a communication network and a core network device, the method comprising determining, at an access gateway of the network, transport path data representing network conditions for respective ones of multiple routes between the low-complexity device and the core network device using selected network access interfaces as points of ingress or egress to the network and selecting, using the transport path data, a network access interface and transport path for the low-complexity device.

## Description

### TECHNICAL FIELD

Aspects relate, in general, to a method for selecting a communication link, a system, a low-complexity apparatus and a computer program product.

### BACKGROUND

Wireless telecommunication systems are widely deployed to provide various types of communication content such as voice, data, and so on between wireless user equipment terminals in communication with one or more base stations via transmissions on forward and reverse links. User equipment (UE) devices may include cellular telephones, smart phones, personal digital assistants (PDAs), wireless modems, handheld devices, laptop computers, netbooks, and so on.

A low-cost/complexity (LC) UE device may be specified with the aim of reducing the UE cost or complexity by, for example, limiting TBS (Transport Block Size) in the downlink and uplink and/or restricting the device RF bandwidth to 1.4 MHz for example.

Some low cost/complexity (LC) or machine type communication (MTC) UEs, or more generally UEs within the 'Internet of Things' (IoT) infrastructure, which provides an IoT internetworking of physical devices, vehicles (also referred to as "connected devices" and "smart devices"), buildings and other items may be considered UEs that can be used by a machine for a specific application. For example, an IoT UE may be used with a smart meter to provide readings or device updates or may provide a location tag, which may, for example, be placed in the basement of a building (e.g. if it is for use with a smart meter) or in a tunnel (for railway signaling for example). Generally, IoT UEs are part of the IoT environment, in which 'dumb' devices may be network connected using IoT UEs.

IoT devices and loT gateways may have multiple access/network interfaces based on different technologies such as Wi-Fi, LTE, 5G, LoRa, HaLow, wire and so on. Currently, the access method/interface that has to be used to transmit and receive data is hard-coded into the loT device software/hardware or is statically configured. This configuration will generally have to be modified or adapted to the dynamic network conditions so that the appropriate access method is chosen on-the-fly.

### SUMMARY

According to an example, there is provided a method for selecting a communication link between a low-complexity device at the edge of a communication network and a core network device, the method comprising determining, at an access gateway of the network, transport path data representing network conditions for respective ones of multiple routes between the low-complexity device and the core network device using selected network access interfaces as points of ingress or egress to the network and selecting, using the transport path data, a network access interface and transport path for the low-complexity device. The method can further comprise, on the basis of the transport path data, configuring multiple network routing resources using a network control device whereby to enable at least transmission of data from the low-complexity device to the core network device using the selecting transport path. The method can further comprise selecting respective different network access interfaces for communications to and from the low-complexity device. The method can further comprise transmitting the transport path data from the access gateway to the low-complexity device and the network control device. The method can further comprise determining, at the network control device using the transport path data, a network access interface and transport path configured to maximise one or more network or device parameters. The method can further comprise selecting, at the low-complexity device, a network access method based on the determined access interface. Selecting a network access interface and transport path for the low-complexity device can include determining respective capabilities of at least selected ones of multiple other devices in the network, whereby to determine an impact of the network access interface and transport path selection on those devices. The method can further comprise transmitting a message to the low-complexity device including an indication to activate the selected network access interface.

According to an example, there is provided a system comprising an access gateway configured to generate transport path data representing network conditions for respective ones of multiple routes between a low-complexity device and a core network device using selected network access interfaces as points of ingress or egress to the network and select, using the transport path data, a network access interface and transport path for the low-complexity device. A network control device can configure, on the basis of the transport path data, multiple network routing resources whereby to enable at least transmission of data from the low-complexity device to the core network device using the selecting transport path. The access gateway can be configured to transmit the transport path data to the low-complexity device and the network control device. The network control device can be configured to determine, using the transport path data, a network access interface and transport path configured to maximise one or more network or device parameters.

According to an example, there is provided a low-complexity apparatus comprising multiple access interfaces for use with respective different network access protocols, the low-complexity apparatus configured to receive transport path data from an access gateway representing network conditions for respective ones of multiple communication routes between the low-complexity device and a core network device using respective ones of the network access interfaces as points of ingress or egress to the network. In an example, the low-complexity device can be a device within an internet-of-things infrastructure or system. The device can be configured to select respective different network access interfaces for communications to and from the core network device.

According to an example, there is provided a computer program product, comprising a computer usable medium having computer readable program code embodied therein, said computer readable program code adapted to be executed to implement a method for selecting a communication link between a low-complexity device at the edge of a communication network and a core network device as provided herein.

### BRIEF DESCRIPTION OF THE DRAWINGS

Embodiments will now be described, by way of example only, with reference to the accompanying drawings, in which:
- Figure 1: is a schematic representation of a system according to an example;
- Figure 2: is a schematic representation of a flow of messages according to an example; and
- Figure 3: is a schematic representation of a system according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

IoT devices, which may be low-complexity devices or apparatus and vice-versa, and IoT gateways may have multiple access/network interfaces based on different technologies. That is, an IoT device or gateway may be able to support communication over various different communication protocols over the uplink and/or downlink. For example, an uplink communication session from an IoT device may be effected using a different protocol to communications on the downlink for the session.

According to an example, an access interface/network of an IoT device and a transport path for data of the IoT device to/from, for example, a core network device such as an loT application server can be selected in order to optimize network resources based on real-time network conditions. The dynamic selection of transmit (TX), as well as receive (RX) interface and transport path can result in energy efficiency for the network and reduce battery drain for IoT devices.

In an example, status information of respective different core and access links is determined and then used whereby to configure the optimal (energy-efficient) path (access and transport), while adhering to the SLA of the subscription and without compromising the QoS / QoE.

In order to determine the most optimal transport path, real-time data of network conditions can be determined and used. For example, access network conditions which an AENE (Access Edge network element) or AGW (Access Gateway) can use to determine the access path can be any one or more of the following (non-exhaustive list):
∘ Access Link Availability Status - Information indicating whether the access link is available for data transmission or not;
∘ Access Link Congestion Status - Information about the buffer status of the access link and the number of users who are sharing the access link;
∘ Access Link Delay Status - Based on the number of users, retransmissions are possible to successfully (without collisions) transmit the data and this parameter indicates the average time to successfully transmit data, while also considering the inherent physical link delay. Along with latency requirements of the application, this can assist the selection of the access network link;
∘ Access Link Cost - The amount of relative hardware and software resources that the loT device has to spend to transmit one unit of data and also the charging information of the different access links;
∘ Access Link Strength - For radio accesses, strength of the received radio signal at the device;
∘ Access Link Energy usage estimate - considering retransmissions (due to congestion) and current location of the loT device, the energy estimate of transmitting a unit of data, under the current conditions of access link strength, Congestion, Delay and expected throughput;
∘ Access Link Coverage: If the loT device is mobile (or moving), then the access link coverage will play a role in selecting the appropriate network access link.
∘ Device Demography: Composite view of multiple devices connected to the system with different capabilities in terms of communication via one or more accesses, e.g: in a population of 5 devices - there can be I device with a single LTE radio, 2 devices with single WiFi radio and 2 devices with dual LTE/WIFI radio capability. So, the selection of the access for the dual radio devices will also need to consider impact of transmissions from the other devices including the single radio devices.

Based on the current network conditions of the different access interfaces of an loT device or a cluster of loT devices connected via an access gateway, an AENE can configure the transport path, UL / DL Access interface and the access methods (Polled Access, Contention Based UL, Broadcast DL), Core Network path and transport mechanism.

AENE can update the transport paths and mechanisms dynamically since it has real-time information as a result of being able to gather dynamic access link (e.g. wireless link) conditions at the edge of the access network via active measurements (e.g. probing) or via reporting from the device or other measurement agents in the network. The transport path can be dynamically controlled using an enhanced SDN controller which is fed with the information of the current network conditions. This network condition information is used by the SDN controller to configure the different transport paths.

Signaling exchange between the AENE and an loT Device can be minimized by use of mechanisms such as:
a) long term session caching at the AENE, considering zero mobility of the device, ability and flexibility to do control plane signaling for any network over any available access mediated by AENE;
b) prior knowledge of an application's delivery deadlines, delivered through a priori signaling or configured at the AENE via other means like provisioning;
c) knowledge of a device reception window (such as device sleep patterns), delivered through a priori signaling or configured via other means like provisioning.

The AENE concept is not limited to the edge of the network. In an example, it can be extended to determine the different access / transport paths / methods, via an element that is deeper in the network e.g. in the core network or beyond the core network.

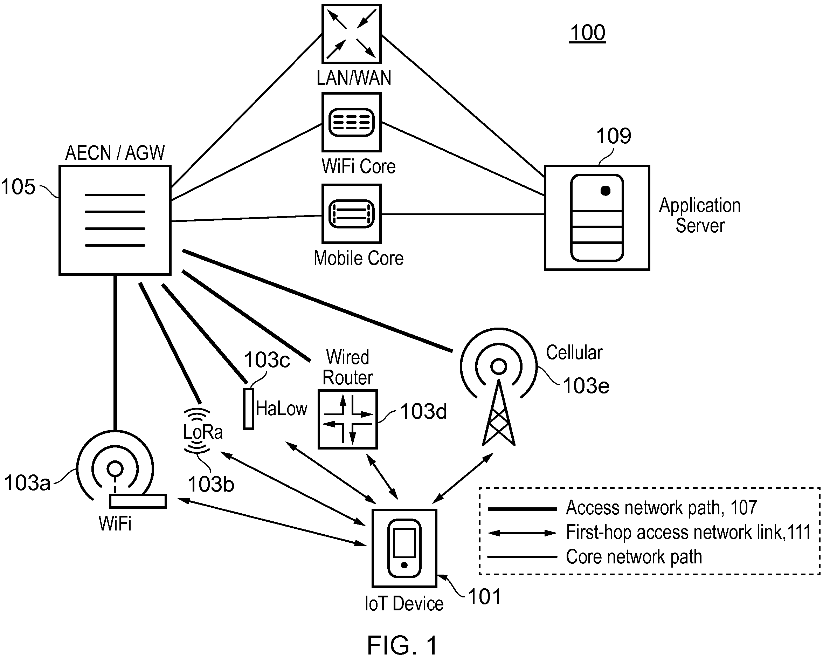

Figure 1 is a schematic representation of a system in which an IoT device communicates with a core network device, such as an application server according to an example. The IoT device 101 has multiple network / access interfaces 103a-e and data/traffic/information to/from these access interfaces via through an AENE or network access gateway 105 using various network access paths 107. The AENE has real-time information of different links between itself and the IoT device 101 and between a core network device 109 such as an application server and itself. Based on this information, the AENE 105 can determine the appropriate access / transport path for the IoT device 101 to transmit / receive the data to/from the device 109. In an example, this information is transferred from the AENE 105 via a control interface to the IoT device 101.

Based on the different access link conditions received, the IoT device 101 can use the recommended (by AENE 105) access interface and select an appropriate access method to perform the transmission of data.

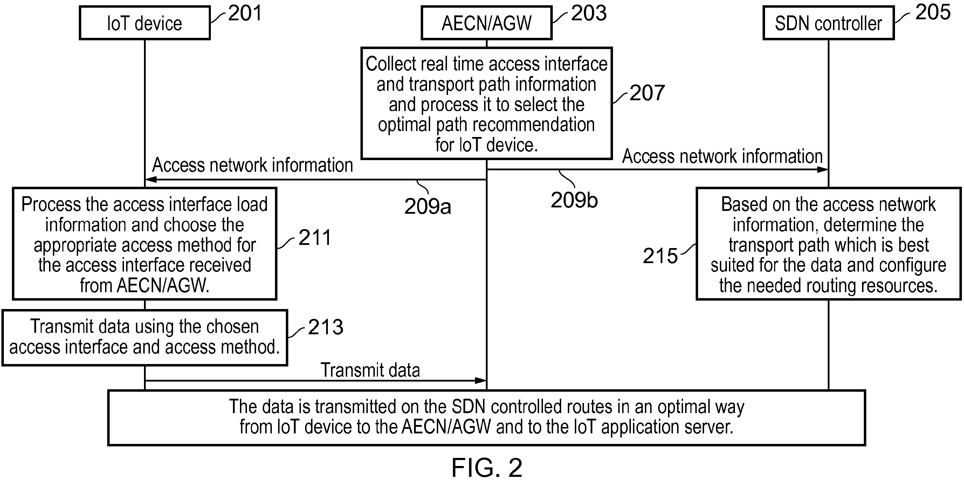

Figure 2 is a schematic representation of a flow of messages according to an example. More specifically, figure 2 depicts a flow of messages between an IoT device 201, a network access gateway 203 and a network control device 205. Access network path data is collected at the AENE 203 at block 207. In an example, the data is collected in real time. For example, as traffic passes via the gateway 203, it can be used to generate transport path information. The report path information can be generated in a number of ways, for example, it may be generated as follows:
a) using reports sent by the device, which reports may specify the network interface in use for a particular packet or session and so on;
b) information collected by the AENE based on proactive probes;
c) information collected by the AENE based on reports from and probing other devices such as network monitor.

In an example, path information can be generated based on the network condition information that has been collected by the AENE. For example, the network condition information can be used to determine useful metrics such as the least loaded path, the lowest cost path, the path that matches latency and/or reliability requirements of the IoT application and so on. Generated transport path information can be sent to the device to enable data transmission path determination and the network can be re-configured, if deemed necessary, via the controller.

Based on the current location of the loT device 201, the preferred first-hop access network link I I I on which the IoT device is to transmit is chosen by AENE 203. The selected/preferred access link information is sent to both IoT device 201 and the SDN controller 205 (209a, b).

Based on this access link information, the IoT device 201 can select (211) an appropriate transmission method (like a user plane path (unicast data, multicast data), control plane path (e.g. SMS, Short Data Burst Signaling Message)) or data rate to be selected or QoS to be used to transmit (213) on that access link. If the IoT device 201 transmits data using a different access network link other than the one recommended by the AENE 203, the control device 205 can re-configure the network transport paths for the traffic dynamically (215). In an example, the control device can be an SDN controller. For example, if the SDN controller detects that the data from the device is coming from a path that it did not expect, it can reconfigure the network paths to accommodate the change as per network policy.

If the loT device 201 has a single access interface, instead of multiple interfaces, the access link information is used to determine the current access link conditions and the IoT device has no choice but to send on the single access link which is available. However, the access link information received from the AENE 203 can still inform the loT device about other access link parameters, which can be used to determine the communication method used and the time (e.g. time of day) at which data can be best transmitted.

The signaling to the device can also include an indication to activate the chosen link, in case the loT device is not active on the chosen link. This indication can be transmitted via control channels associated with the chosen link or through alternate access paths that are available to convey the indication to the IoT device.

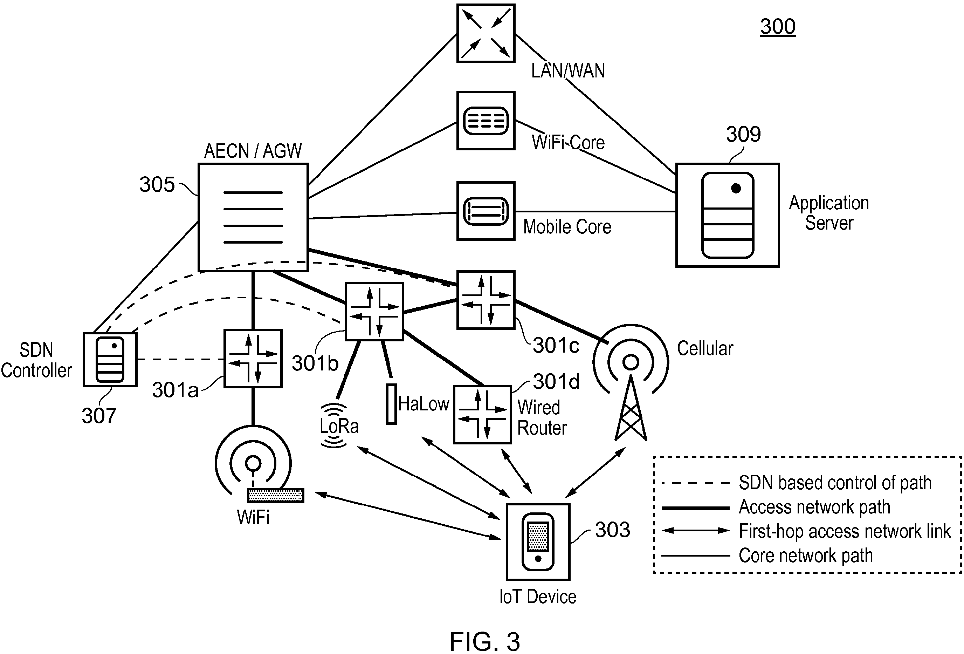

Figure 3 is a schematic representation of a system according to an example. Figure 3 represents a reference network in which the different transport routes are configured based on the information received from the AENE (as show in Figure 2). SDN controlled routers / switches 301a-d are depicted between the IoT device 303 and AENE 305. In an example, controller 307 can configure any of the SDN-capable routers/switches in the entire route between IoT device 303 and the core network device 309.

Accordingly, a method for selecting a communication link between an loT device at the edge of a communication network 100, 300 and a core network device includes determining, at an access gateway of the network, transport path data representing network conditions for respective ones of multiple routes between the low-complexity device and the core network device using selected network access interfaces as points of ingress or egress to the network. The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for selecting a communication link between a low-complexity device at the edge of a communication network and a core network device, the method comprising:
determining, at an access gateway of the network, transport path data representing network conditions for respective ones of multiple routes between the low-complexity device and the core network device using selected network access interfaces as points of ingress or egress to the network; and
selecting, using the transport path data, a network access interface and transport path for the low-complexity device.

2. A method as claimed in claim 1, further comprising:
on the basis of the transport path data, configuring multiple network routing resources using a network control device whereby to enable at least transmission of data from the low-complexity device to the core network device using the selecting transport path.

3. A method as claimed in claim 2, further comprising selecting respective different network access interfaces for communications to and from the low-complexity device.

4. A method as claimed in any preceding claim, further comprising transmitting the transport path data from the access gateway to the low-complexity device and the network control device.

5. A method as claimed in claim 4, further comprising determining, at the network control device using the transport path data, a network access interface and transport path configured to maximise one or more network or device parameters.

6. A method as claimed in claim 5, further comprising selecting, at the low-complexity device, a network access method based on the determined access interface.

7. A method as claimed in any preceding claim, wherein selecting a network access interface and transport path for the low-complexity device includes determining respective capabilities of at least selected ones of multiple other devices in the network, whereby to determine an impact of the network access interface and transport path selection on those devices.

8. A method as claimed in any preceding claim, further comprising transmitting a message to the low-complexity device including an indication to activate the selected network access interface.

9. A system comprising:
an access gateway configured to:
generate transport path data representing network conditions for respective ones of multiple routes between a low-complexity device and a core network device using selected network access interfaces as points of ingress or egress to the network; and
select, using the transport path data, a network access interface and transport path for the low-complexity device.

10. A system as claimed in claim 9, further comprising a network control device to configure, on the basis of the transport path data, multiple network routing resources whereby to enable at least transmission of data from the low-complexity device to the core network device using the selecting transport path.

11. A system as claimed in claim 9 or 10, wherein the access gateway is configured to transmit the transport path data to the low-complexity device and the network control device.

12. A system as claimed in any of claims 9 to 11, wherein the network control device is configured to determine, using the transport path data, a network access interface and transport path configured to maximise one or more network or device parameters.

13. A low-complexity apparatus comprising multiple access interfaces for use with respective different network access protocols, the low-complexity apparatus configured to:
receive transport path data from an access gateway representing network conditions for respective ones of multiple communication routes between the low-complexity device and a core network device using respective ones of the network access interfaces as points of ingress or egress to the network.

14. A low-complexity apparatus as claimed in claim 13, wherein the low-complexity device is configured to select respective different network access interfaces for communications to and from the core network device.

15. A computer program product, comprising a computer usable medium having computer readable program code embodied therein, said computer readable program code adapted to be executed to implement a method for selecting a communication link between a low-complexity device at the edge of a communication network and a core network device as claimed in any of claims 1 to 8.
